# EUROPÄISCHE PATENTSCHRIFT

(11) **EP 2 876 782 B1**
(45) Veröffentlichungstag und Bekanntmachung des Hinweises auf die Patenterteilung: **26.12.2018**
(21) Anmeldenummer: 13194467.0
(22) Anmeldetag: 26.11.2013
(51) Int. Cl.: H02K 1/22, H02K 1/16

(54) **Reluktanzmaschine**
Reluctance machine
Machine à reluctance

(43) Veröffentlichungstag der Anmeldung: 27.05.2015
(73) Patentinhaber: Siemens Aktiengesellschaft, 80333 München (DE)
(72) Erfinder: Vollmer, Rolf, 36129 Gersfeld (DE)

(56) Entgegenhaltungen:
- EP-A1- 1 978 619
- WO-A1-2014/013830
- US-A1- 2009 167 119
- YONG KWON CHOI ET AL: "Pole-Shape Optimization of a Switched-Reluctance Motor for Torque Ripple Reduction", IEEE TRANSACTIONS ON MAGNETICS, IEEE SERVICE CENTER, NEW YORK, NY, US, Bd. 43, Nr. 4, 1. April 2007 (2007-04-01), Seiten 1797-1800, XP011175554, ISSN: 0018-9464, DOI: 10.1109/TMAG.2006.892292

## Beschreibung

Die Erfindung betrifft das Gebiet der elektrischen Maschinen, insbesondere betrifft die Erfindung eine Reluktanzmaschine. Hierbei weist die Reluktanzmaschine einen Stator mit einer Statorkontur in Umfangsrichtung der Reluktanzmaschine und einen Rotor mit einer Rotorkontur in Umfangsrichtung der Reluktanzmaschine auf. Ferner ist zwischen dem Stator und dem Rotor ein Spalt angeordnet, der von der Statorkontur und der Rotorkontur begrenzt wird.

Bei den bisher bekannten Reluktanzmaschinen tritt eine Drehmomentwelligkeit auf. Hierbei hängt die Drehmomentwelligkeit von der Anzahl der Polpaare der Reluktanzmaschine ab und ist umso höher, je geringer die Anzahl der Polpaare ist. Bei Reluktanzmaschinen, die mit Drehstrom gespeist werden, ergibt sich die Drehmomentwelligkeit aus dem sechsfachen der Anzahl der Polpaare. Dies bedeutet, dass beispielsweise Drehstromreluktanzmotoren mit symmetrischen Wicklungen Pendeldrehmomente mit 6 multipliziert mit p, also der sechsfachen Polzahl aufweisen. Dies wirkt sich mechanisch auf die Rotorumdrehung aus, die unruhig wird, da der Motor pro Umdrehung mit einer Häufigkeit von 6 multipliziert mit p beschleunigt und bremst. Die Ursache der sechsfachen (6 x p) Pendeldrehmomente ist systembedingt. Ein symmetrisches Wicklungssystem, das mit Drehstrom gespeist wird, erzeugt Drehfelder im Wirkspalt zwischen Stator und Rotor und Sättigungsschwankungen im Ständerblech, die beide zu 6 mal p Pendeldrehmomente führen.

Die systembedingte Drehmomentwelligkeit scheint bisher hingenommen worden zu sein. Bekannte Maßnahmen zur Verbesserung des Betriebsverhaltens von Reluktanzmaschinen, wie Schrägung oder Staffelung, haben keinen Einfluss auf die Drehmomentwelligkeit.

US 2009/167119 A1 beschreibt einen Reluktanzmotor zur Unterdrückung von Drehmomentenwelligkeit. Hierbei weist der Reluktanzmotor eine Vielzahl von konkaven und konvexen Bereichen an den Enden der Rotorzähne auf.

EP 1 978 619 A1 beschreibt eine Rotationsmaschine mit einer Ständerkontur, deren Zähne in Radialrichtung unterschiedlich lang ausgebildet sind, so dass ein Luftspalt entsteht, der in seiner Breite variiert.

WO 2014/013830 A1 beschreibt eine elektrische Rotationsmaschine mit einem Stator, der Zähne aufweist, die eine variierende Spaltbreite zwischen Rotor und Stator bereitstellen.

Das Dokument von Yong Kwon Choi "Pole-Shape Optimization of a Switched-Reluctance Motor for Torque Ripple Reduction"; IEEE Transactions on Magnetics, IEEE Service Center, New York, NY, US, Bd. 43, Nr. 4, 1. April 2007, Seiten 1797-1800, ISSN 0018-9464 beschreibt einen Reluktanzmotor mit Polschuhen. Es wird durch eine Kontur des Stators und die vorhandenen Polschuhe des Rotors ein sich in seiner Breite verändernder Luftspalt ausgebildet. Hierbei wird in Radialrichtung der Luftspalt in Bereichen geringer, in denen der Rotorpol den Statorpol überdeckt.

Es ist Aufgabe der Erfindung das Auftreten der Drehmomentwelligkeit bei einer Reluktanzmaschine zu reduzieren.

Diese Aufgabe wird mit einer Reluktanzmaschine gemäß den Merkmalen des Patentanspruchs 1 gelöst.

Es wird demnach eine Reluktanzmaschine vorgeschlagen, die einen nichtkonstanten Ringspalt zwischen Stator und Rotor aufweist. Der Spalt, auch Wirkspalt genannt, ist vorzugsweise als Luftspalt ausgebildet. Die Kontur des Spaltes hat die Funktion, die wirkenden Kräfte zu vergleichmäßigen, so dass eine Drehmomentwelligkeit, d.h. ein pulsierendes Drehmoment bei Rotation, reduziert wird. Unter dem Begriff Reluktanzmaschine ist ein Reluktanzmotor wie auch ein Reluktanzgenerator zu verstehen. Hierbei wird ein Drehmoment im Rotor ausschließlich durch eine Reluktanzkraft erzeugt, d.h. eine Kraft aufgrund eines magnetischen Widerstandes. Das System aus Stator und Rotor strebt einen minimalen magnetischen Widerstand an, so dass eine Rotationsbewegung des Rotors der Reluktanzmaschine erzeugt wird.

Die Reluktanzmaschine kann als Synchron-Reluktanzmaschine ausgeführt werden. Ferner kann die Reluktanzmaschine als Asynchron-Reluktanzmaschine ausgeführt sein.

Mit Vorteil kann vorgesehen werden, dass eine Vielzahl von minimalen Breiten und eine Vielzahl von maximalen Breiten in Umfangsrichtung der Reluktanzmaschine gleichmäßig verteilt sind. Dies verbessert die Vergleichmäßigung des Drehmoments der Reluktanzmaschine.

Ferner kann bevorzugterweise vorgesehen werden, dass die Reluktanzmaschine Polpaare aufweist und die Vielzahl der minimalen Breiten und die Vielzahl der maximalen Breiten jeweils ein Sechsfaches der Anzahl der Polpaare ist. Eine solche Aus führungsform eignet sich bei einer Reluktanzmaschine, die mit Drehstrom betrieben wird.

Mit Vorteil kann vorgesehen werden, dass die maximale Breite des Spaltes zwischen einer ersten Nut einer ersten elektrischen Phase und einer zweiten Nut einer zweiten elektrischen Phase angeordnet ist, wobei die erste Nut und die zweite Nut in der Umfangsrichtung benachbart zueinander angeordnet sind. Somit ist die die maximale Spaltbreite an einem Übergangsbereich von Nuten von einer ersten Phase in eine zweite Phase angeordnet ist. Eine Reluktanzmaschine, die mit Drehstrom gespeist wird, weist mindestens zwölf solcher Übergangsbereiche oder Übergangsstellen. Die Übergangsstellen befinden sich jeweils zwischen den Nuten der Phasen U, V und W sowohl am Hinleiter wie auch am Rückleiter, d.h. bei U+, U-, V+, V-, W+, W-. Die Nuten können beispielsweise in einem Stator angeordnet sein, der mit Strömen eines Drehstromsystems versorgt wird.

Bevorzugterweise kann vorgesehen werden, dass die minimale Breite in einem mittleren Bereich einer Nutgruppe angeordnet ist, wobei die Nutgruppe von einer elektrischen Phase der Reluktanzmaschine gespeist wird. Die minimale Breite des Spalts wird innerhalb einer Nutgruppe mittig angeordnet, d.h. in einem Bereich in Umfangsrichtung von Nuten, die zu einer elektrischen Phase der Reluktanzmaschine gehören. Je geringer die Breite des Spaltes ist, desto größer ist die Reluktanzkraft. Dies bedeutet, dass man an definierten Stellen die Reluktanzkraft vergrößert und anschließend verkleinert, um in Umfangsrichtung der Drehmomentenwelligkeit entgegenzuwirken. Der mittlere Bereich kann in Umfangsrichtung die Mitte einer Nutgruppe sein, die mehrere Nuten einer elektrischen Phase aufweist. Ist die Anzahl der Nuten innerhalb einer Nutgruppe gerade, so fällt der mittlere Bereich in einen Zwischenbereich von benachbarten Nuten.

In einem Ausführungsbeispiel der erfindungsgemäßen Reluktanzmaschine kann vorgesehen werden, dass die maximale Breite des Spaltes 0,7 mm beträgt.

Ferner kann in einem Ausführungsbeispiel der erfindungsgemäßen Reluktanzmaschine vorgesehen werden, dass die minimale Breite des Spaltes 0,5 mm beträgt.

Mit Vorteil kann vorgesehen werden, dass die Reluktanzmaschine eine Polzahl von vier aufweist. Die Drehzahl der Reluktanzmaschine hängt von der Frequenz der Wechselspannung und der Polpaarzahl ab. Solche vierpolig ausgeführten Reluktanzmaschinen können vorteilhafterweise als Synchron-Reluktanzmotoren eingesetzt werden. Hierbei dreht sich der Rotor synchron mit dem Drehfeld der eingespeisten Wechselspannung. Ferner kann vorgesehen werden, dass die Reluktanzmaschine eine Nutzpolpaarzahl von vier aufweist.

Vorteilhafterweise kann vorgesehen werden, dass die Reluktanzmaschine eine Synchronreluktanz-Maschine ist, die vier Pole und 48 Nuten aufweist. Bei dieser speziellen Ausführungsform treten besonders deutlich die Effekte einer Vergleichmäßigung der Drehmomentwelligkeit auf.

In einem weiteren Ausführungsbeispiel der erfindungsgemäßen Reluktanzmaschine kann vorgesehen werden, dass der Stator eine Anzahl von N1 Nuten aufweist, wobei N1=2*p*12 ist, mit einer Nutzpolzahl p. Es ist bevorzugt N1=48 und 2p=4 zu verwenden. Diese Ausführungsform ist ebenfalls vorteilhaft zur Vergleichmäßigung der Drehmomentwelligkeit.

Im Folgenden wird die Erfindung anhand eines Ausführungsbeispiels näher beschrieben. Hierbei sind die Figuren schematisch dargestellt und nicht maßstabsecht.

Hierbei zeigen
- FIG 1: ein Ausführungsbeispiel einer Reluktanzmaschine, die als Synchronreluktanz-Maschine ausgebildet ist; und
- FIG 2: einen vergrößerten Ausschnitt der Reluktanzmaschine der FIG 1.

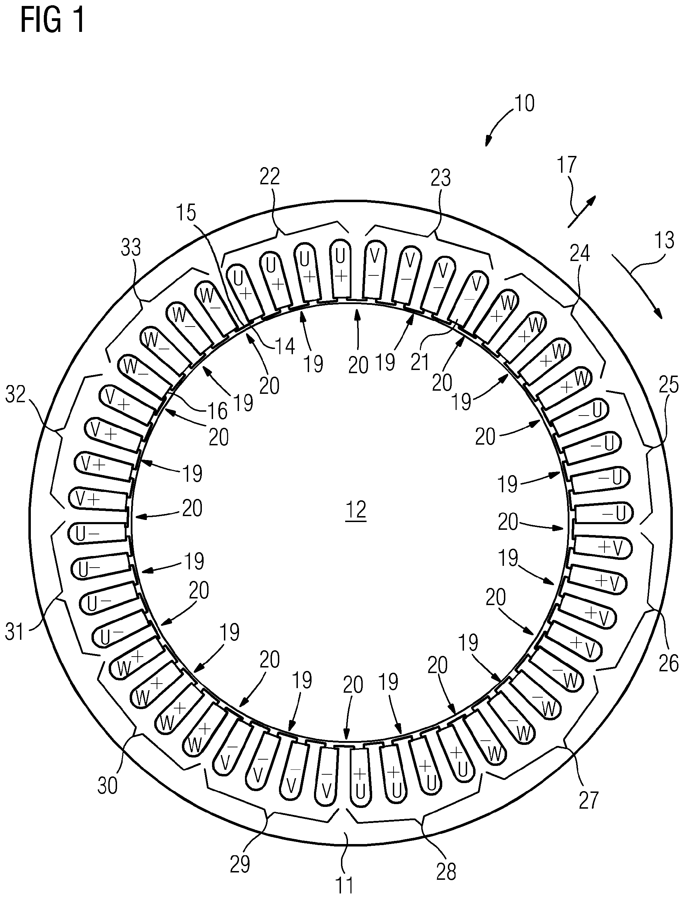

FIG 1 zeigt eine Reluktanzmaschine 10, die als Synchronreluktanz-Maschine ausgebildet ist. Die Reluktanzmaschine 10 ist in FIG 1 in einer geschnittenen Queransicht dargestellt, so dass ein Stator 11 und ein Rotor 12 sichtbar sind. In Umfangsrichtung 13 weist der Rotor 12 eine Rotorkontur 14 auf, wobei die Umfangsrichtung 13 mit einem Peil angedeutet ist und gleichzeitig der Drehrichtung des Rotors 12 entspricht. Ferner weist der Stator 11 eine Statorkontur 15 in Umfangsrichtung 13 auf. Die Rotorkontur 14 als zweidimensionale Kontur entspricht einem Kreis während die Statorkontur 15 als zweidimensionale Kontur von einem Kreis abweicht.

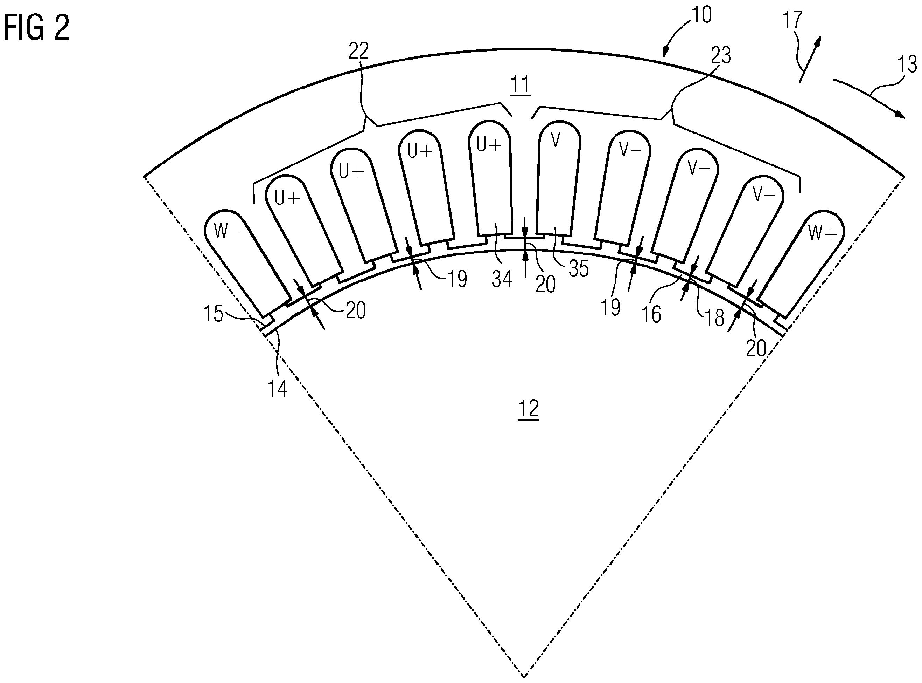

FIG 2 zeigt einen Ausschnitt der Reluktanzmaschine 10 der FIG 1 mit vergrößerter Ansicht der Rotorkontur 14 und der Statorkontur 15.

In der Reluktanzmaschine 10 der FIG 1 und FIG 2 ist zwischen dem Stator 12 und dem Rotor 14 ein Spalt 16, genauer ein Luftspalt, angeordnet, der von der Statorkontur 15 und der Rotorkontur 14 begrenzt wird. In Radialrichtung 17 weist der Spalt 16 eine Breite 18 auf, die in FIG 2 exemplarisch angedeutet ist. Der Spalt 16 variiert in seiner Breite 18 in Umfangsrichtung 13, so dass in Bezug auf den Spalt 16 eine Vielzahl von minimalen Breiten 19 und eine Vielzahl von maximalen Breiten 20 vorhanden sind.

Es wird somit eine unrunde Kontur an dem Stator 11 als Statorwirkoberfläche bereitgestellt, wobei der Rotor 12 einen Rotorumfangskreis aufweist. Hierbei erzeugt die Statorwirkoberfläche des Stator 11 den Spalt 16 zwischen einem Statorblech des Stators 11 und einem Rotorumfangskreis des Rotors 12.

Die Reluktanzmaschine 10 in FIG 1 ist dreiphasig ausgebildet, so dass die Phasen U, V, W eines Drehstromsystems mit sinusförmiger Wechselspannung pro Phase und entsprechenden Strömen der Reluktanzmaschine 10 zugeführt werden. Die Reluktanzmaschine weist insgesamt im Stator 48 Nuten auf, mit einer Wicklung mit der Polpaarzahl p = 2 Die Polzahl 2p beträgt 4, was einer Lochzahl von q =4 entspricht, wobei die Nuten 21 gleichmäßig in Umfangsrichtung 13 des Stators 11 angeordnet sind. Hierbei sind jeweils vier Nuten 21, auch Statornuten genannt, nebeneinander am Umfang mit Wicklungen einer Phase und einer Richtung belegt, die jeweils eine Nutgruppe 22-33 im Stator 11 bilden. Insgesamt weist die Reluktanzmaschine 10 zwölf Nutgruppen 22-33 auf. Hierbei liegen sich die Nutgruppen 22 und 28 gegenüber. Die Nutgruppen 25 und 31 liegen sich ebenfalls gegenüber. Ferner liegen sich die Nutgruppen 23 und 29 gegenüber. In FIG 1 sind Ströme U, V und W angedeutet, die jeweils als Funktion der Zeit f(t)=i*sin(omega*t) einen sinusförmigen Verlauf aufweisen. Die Nuten sind den Phasen zugeordnet, wobei + und - räumliche Aussagen sind und z.B. die Wickelrichtung angeben.

Der Breite des Spalts 16 ist so ausgebildet, dass der Spalt 16 mit einer Anzahl von sechsfacher Polzahl breiter und wieder schmaler wird. Dies bedeutet, dass die Reluktanzmaschine 10 der FIG 1 mit einer Polpaarzahl von 2 insgesamt zwölf maximale Breiten 20 und zwölf minimale Breiten 19 aufweist. Hierbei liegen zwischen zwei maximalen Breiten eine minimale Breite. Die Anordnung der Minima und Maxima der Spaltabstände sind somit abwechselnd in Umfangsrichtung 13 angeordnet.

Die Orte am Umfang der Reluktanzmaschine mit maximalen Spalten 20 und minimalen Spalten 19 haben eine definierte Lage in Bezug auf die Nuten 21 des Stators 11, denen die drei Phasen U, V und W des Drehstromsystems zugeordnet sind.

In der Mitte der Gruppe von nebeneinander liegenden Nuten 21, die zu einer Phase gehören, d.h. einer Nutgruppe, ist der Spalt 16 zwischen der Statorkontur 15 und dem Umfangskreis des Rotors 12 am kleinsten und hat somit seine minimale Breite 19. Zwischen den Nuten 16, bei denen die Phase wechselt, d.h. im Übergangsbereich von einer Nutgruppe zu einer benachbarten weiteren Nutgruppe, ist der Spalt 16 am größten und hat somit seine maximale Breite 20. Eine maximale Breite 20 des Spaltes 16 liegt somit zwischen einer ersten Nut 34 einer ersten elektrischen Phase, in FIG 2 ist dies der Hinleiter der Phase U, und einer zweiten Nut 35 einer zweiten elektrischen Phase, in FIG 2 ist dies der Rückleiter der Phase V. Hierbei sind die erste Nut 34 und die zweite Nut 35 in der Umfangsrichtung 13 der Reluktanzmaschine 10 benachbart zueinander angeordnet sind.

Der Unterschied zwischen der minimalen Spaltbreite 19 und der maximalen Spaltbreite 20 ist von der absoluten Größe des minimalen Spalts und von der Baugröße der Reluktanzmaschine 10 abhängig. Im vorliegenden Ausführungsbeispiel liegt ein minimaler Spalt von 0,5 mm und ein maximaler Spalt von 0,7 mm vor.

Mit der erfindungsgemäßen Reluktanzmaschine 10 wird eine deutliche Senkung der Drehmomentwelligkeit erreicht, so dass es möglich wird, Reluktanzmaschinen dort einzusetzen, wo sie bisher wegen zu hoher Drehmomentwelligkeit nicht zum Einsatz kamen. Es eröffnen sich somit weitere Einsatzgebiete für Reluktanzmaschinen. Beispielsweise kann die erfindungsgemäße Reluktanzmaschine als Motor und Generator in einem Elektrofahrzeug verwendet werden, insbesondere in einem Hybridelektrofahrzeug. Neben dem Gebiet der Antriebe von Elektrofahrzeugen und Elektrohybridfahrzeuge sind weitere Anwendungen denkbar, wie z.B. Anwendungen für Aufzugsantriebe, für Motoren in der Produktionstechnik und für Werkzeugmaschinen.

## Patentansprüche

1. Reluktanzmaschine (10) aufweisend
- einen Stator (11) mit einer Statorkontur (15) in einer Umfangsrichtung (13) der Reluktanzmaschine (10);
- einen Rotor (12) mit einer Rotorkontur (14) in der Umfangsrichtung (13) der Reluktanzmaschine (10);
- wobei zwischen dem Stator (11) und dem Rotor (12) ein Spalt (16) angeordnet ist, der von der Statorkontur (15) und der Rotorkontur (14) begrenzt wird,
wobei
die Statorkontur (15) so ausgebildet ist, dass der Spalt (16) in der Umfangsrichtung (13) der Reluktanzmaschine (10) in seiner Breite (18) variiert und mindestens eine minimale Breite (19) und mindestens eine maximale Breite (20) aufweist, **dadurch gekennzeichnet, dass** die Reluktanzmaschine (10) im Stator (11) Nuten (21, 34, 35) aufweist, wobei nebeneinander liegende Nuten (21), die zu einer Phase (U, V) gehören, jeweils eine Nutgruppe (22,23) bilden, deren Nuten (21) am Umfang mit Wicklungen einer Phase (U, V) und einer Richtung belegt sind, dass die maximale Breite (20) des Spaltes (16) zwischen einer ersten Nut (34) einer ersten Nutgruppe (22), gespeist von einer ersten elektrischen Phase (U) der Reluktanzmaschine (10), und einer zweiten Nut (35) einer zweiten Nutgruppe (23), gespeist von einer zweiten elektrischen Phase (V) der Reluktanzmaschine (10), angeordnet ist, wobei die erste Nut (34) und die zweite Nut (35) in der Umfangsrichtung (13) benachbart zueinander angeordnet sind, und dass die minimale Breite (19) des Spaltes (16) in einem mittleren Bereich einer jeden Nutgruppe (22, 23) angeordnet ist.

2. Reluktanzmaschine (10) nach Anspruch 1, wobei eine Vielzahl von minimalen Breiten (19) und eine Vielzahl von maximalen Breiten (20) in der Umfangsrichtung (13) der Reluktanzmaschine (10) gleichmäßig verteilt sind.

3. Reluktanzmaschine (10) nach Anspruch 1 oder Anspruch 2, wobei die Reluktanzmaschine (10) Polpaare aufweist und die Vielzahl der minimalen Breiten (19) und die Vielzahl der maximalen Breiten (20) jeweils ein Sechsfaches der Anzahl von Polpaaren der Reluktanzmaschine (10) ist.

4. Reluktanzmaschine (10) nach einem der Ansprüche 1 bis 3, wobei die maximale Breite (20) des Spaltes (16) 0,7 mm beträgt.

5. Reluktanzmaschine (10) nach einem der Ansprüche 1 bis 4, wobei die minimale Breite (19) des Spaltes (16) 0,5 mm beträgt.

6. Reluktanzmaschine (10) nach einem der Ansprüche 1 bis 5, wobei die Reluktanzmaschine (10) eine Polzahl von vier aufweist.

7. Reluktanzmaschine (10) nach einem der Ansprüche 1 bis 6,wobei die Reluktanzmaschine (10) eine Synchronreluktanz-Maschine ist, die vier Pole und 48 Nuten (21) aufweist.

8. Reluktanzmaschine (10) nach einem der Ansprüche 1 bis 7, wobei der Stator (11) eine Anzahl von N1 Nuten mit N1=2*p*12 aufweist, wobei p eine Nutzpolzahl ist und vorzugsweise N1=48 und 2p=4 ist.

## Claims

1. Reluctance machine (10) having
- a stator (11) with a stator contour (15) in a circumferential direction (13) of the reluctance machine (10) ;
- a rotor with a rotor contour (14) in the circumferential direction (13) of the reluctance machine (10);
- wherein a gap (16) is arranged between the stator (11) and the rotor (12) which is bounded by the stator contour (15) and the rotor contour (14),
wherein
the stator contour (15) is designed such that the gap (16) in the circumferential direction (13) of the reluctance machine (10) varies in its width (18) and has at least one minimum width (19) and at least one maximum width (20), **characterised in that**
the reluctance machine (10) has grooves (21, 34, 35) in the stator (11), wherein adjacent grooves (21) that belong to a phase (U, V) in each case form a groove group (22, 23), the grooves (21) of which are occupied at the circumference with windings of a phase (U, V) and of a direction,
the maximum width (20) of the gap (16) is arranged between a first groove (34) of a first groove group (22), fed by a first electrical phase (U) of the reluctance machine (10), and a second groove (35) of a second groove group (23), fed by a second electrical phase (V) of the reluctance machine (10), wherein the first groove (34) and the second groove (35) are arranged adjacent to one another in the circumferential direction (13), and
the minimum width (19) of the gap (16) is arranged in a middle region of each groove group (22, 23).

2. Reluctance machine (10) according to claim 1, wherein a plurality of minimum widths (19) and a plurality of maximum widths (20) are uniformly distributed in the circumferential direction (13) of the reluctance machine (10).

3. Reluctance machine (10) according to claim 1 or claim 2, wherein the reluctance machine (10) has pole pairs and the plurality of the minimum widths (19) and the plurality of the maximum widths (20) are each six times the number of pole pairs of the reluctance machine (10).

4. Reluctance machine (10) according to one of claims 1 to 3, wherein the maximum width (20) of the gap (16) is 0.7 mm.

5. Reluctance machine (10) according to one of claims 1 to 4, wherein the minimum width (19) of the gap (16) is 0.5 mm.

6. Reluctance machine (10) according to one of claims 1 to 5, wherein the reluctance machine (10) has a pole number of four.

7. Reluctance machine (10) according to one of claims 1 to 6, wherein the reluctance machine (10) is a synchronous reluctance machine having four poles and 48 grooves (21).

8. Reluctance machine (10) according to one of claims 1 to 7, wherein the stator (11) has a number of grooves N1 where N1=2*p*12, wherein p is a number of useful poles and preferably N1=48 and 2p=4.

## Revendications

1. Machine (10) à réluctance comportant
- un stator (11) ayant un contour (15) dans une direction (13) de pourtour de la machine (10) à réluctance;
- un rotor (12) ayant un contour (14) dans la direction (13) de pourtour de la machine (10) à réluctance;
- dans laquelle, entre le stator (11) et le rotor (12), est prévu un intervalle (16), délimité par le contour (15) du stator et par le contour (14) du rotor,
dans laquelle
le contour (15) du stator est constitué de manière à ce que l'intervalle (16) varie en largeur (18) dans la direction (13) de pourtour de la machine (10) à réluctance et ait au moins une largeur (19) minimum et au moins une largeur (20) maximum,
**caractérisée en ce que**
la machine (10) à réluctance a des encoches (21) dans le stator (11), des encoches (21) côte à côte, qui appartiennent à une phase (U, V), formant respectivement un groupe (22, 23) d'encoches, dont les encoches (21) sont occupées sur le pourtour par des enroulements d'une phase (U, V) et d'une direction,
**en ce que** la largeur (20) maximum de l'intervalle (16) est prévue entre une première encoche (34) d'un premier groupe (22) d'encoches, alimenté par une première phase (U) électrique de la machine (10) à réluctance, et une deuxième encoche (35) d'un deuxième groupe (23) d'encoches, alimenté par une deuxième phase (V) électrique de la machine (10) à réluctance, la première encoche (34) et la deuxième encoche (35) étant voisines l'une de l'autre dans la direction (3) de pourtour et
**en ce que** la largeur (19) minimum de l'intervalle (16) est prévue dans une partie médiane de chaque groupe (22, 23) d'encoches.

2. Machine (10) à réluctance suivant la revendication 1, dans laquelle une pluralité de largeurs (19) minimum et une pluralité de largeurs (20) maximum sont réparties uniformément dans la direction (13) de pourtour de la machine (10) à réluctance.

3. Machine (10) à réluctance suivant la revendication 1 ou la revendication 2, dans laquelle la machine (10) à réluctance a des paires de pôles et la pluralité des largeurs (19) minimum et la pluralité des largeurs (20) maximum représentent chacune six fois le nombre de paires de pôles de la machine (10) à réluctance.

4. Machine (10) à réluctance suivant l'une des revendications 1 à 3, dans laquelle la largeur (20) maximum de l'intervalle (16) est de 0,7 mm.

5. Machine (10) à réluctance suivant l'une des revendications 1 à 4, dans laquelle la largeur (19) minimum de l'intervalle (16) est de 0,5 mm.

6. Machine (10) à réluctance suivant l'une des revendications 1 à 5, dans laquelle la machine (10) à réluctance a un nombre de pôles de quatre.

7. Machine (10) à réluctance suivant l'une des revendications 1 à 6, dans laquelle la machine (10) à réluctance est une machine à réluctance synchrone, qui a quatre pôles et 48 encoches (21).

8. Machine (10) à réluctance suivant l'une des revendications 1 à 7, dans laquelle le stator (11) a un nombre de N1 encoches avec N1=2*p*12, p étant un nombre de pôles utiles et de préférence N1=48 et 2p=4.
